# EUROPEAN PATENT APPLICATION

(11) **EP 1 347 651 A1**
(43) Date of publication of application: **24.09.2003**
(21) Application number: 00987661.6
(22) Date of filing: 20.12.2000
(51) Int. Cl.: H04N 7/68

(54) **METHOD AND APPARATUS FOR DECODING MOTION VIDEO IMAGE**

(71) Applicant: MITSUBISHI DENKI KABUSHIKI KAISHA, Tokyo 100-8310 (JP)
(72) Inventor: KAZAYAMA, Masahiro, Mitsubishi Denki Kabushiki K., Tokyo 100-8310 (JP); KURODA, Shinichi, Mitsubishi Denki Kabushiki Kais., Tokyo 100-8310 (JP)
(74) Representative: Pfenning, Meinig & Partner
(86) International application number: JP0009052
(87) International publication number: WO02051162

(57) **Abstract**

An error detection unit (11) of a variable-length decoding unit (10) can detect an error that occurs in a coded picture to be decoded to send error information on the error to a control unit (8). When the control unit (8) determines that an error has been detected or the frequency of occurrence of errors is large enough to have a deleterious effect on decoded pictures based on the error information, the control unit (8) stops the transfer of decoded picture data to a display unit (9). After that, the control unit (8) restarts the transfer of decoded picture data to the display unit (9) when it determines that no error has been detected or the frequency of occurrence of errors is too small to have a deleterious effect on decoded pictures. As a result, any hard-to-see picture disturbed due to occurrence of errors, witch may provide a sense of incompatibility for users, can be prevented from being displayed.

## Description

### Field of the Invention

The present invention relates to a moving picture decoding method and apparatus that receive and decode compressed coded video data according to a moving picture compression and decompression standard, such as MPEG2 or MPEG4, and that display decoded pictures.

### Background of the Invention

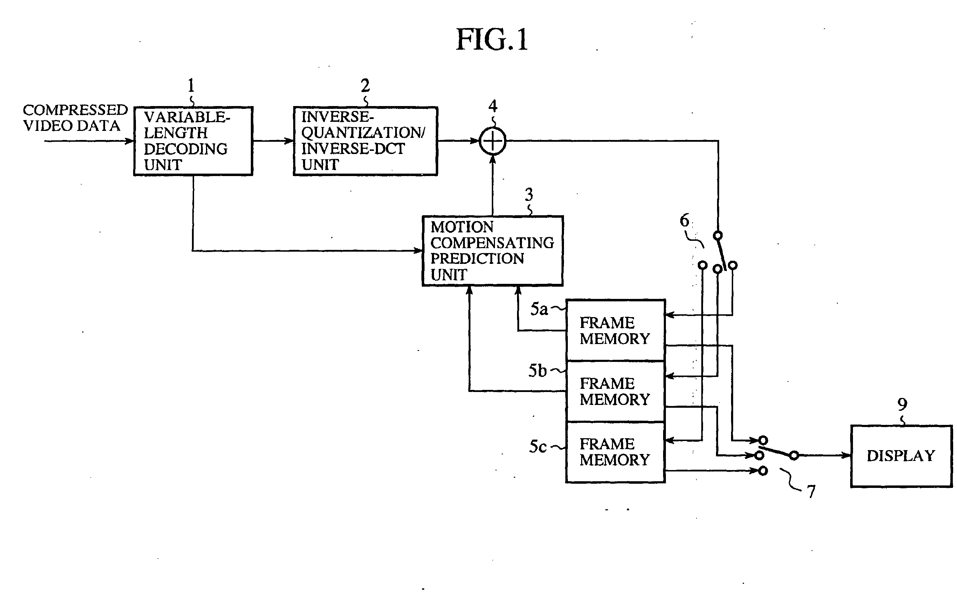

Fig. 1 is a block diagram showing the structure of a prior art moving picture decoder that receives and decodes compressed coded video data according to a moving picture compression and decompression standard, such as MPEG2 or MPEG4, and that displays decoded pictures. In the figure, reference numeral 1 denotes a variable-length decoding unit that variable-length decodes compressed coded video data received thereby, reference numeral 2 denotes a inverse-quantization/inverse-DCT unit that performs inverse-quantization and inverse-DCT on the variable-length decoded data, reference numeral 3 denotes a motion compensating prediction unit that produces a predictive picture according to motion vector information decoded by the variable-length decoding unit 1, reference numeral 4 denotes an adder that adds inverse-quantized and inverse-DCT processed data and the predictive picture, reference numerals 5a, 5b, and 5c denote frame memories, respectively, reference numeral 6 denotes a switch that switches the destination of the output of the adder 4 to either of the frame memories 5a to 5c so as to send the output of the adder 4 to either of the frame memories 5a to 5c, and reference numeral 7 denotes a switch that selects one of the outputs of the frame memories 5a to 5c so as to send out the selected output.

Next, a description will be made as to the operation of the prior art moving picture decoder.

The variable-length decoding unit 1 variable-length decodes compressed video data received thereby. The inverse-quantization/inverse-DCT unit 2 performs inverse-quantization and inverse-DCT on the data variable-length decoded by the variable-length decoding unit 1 and outputs the inverse-quantized and inverse-DCT processed data to the adder 4. On the other hand, the motion compensating prediction unit 3 produces a predictive picture according to motion vector information decoded by the variable-length decoding unit 1 and outputs the predictive picture to the adder 4. The adder 4 then adds the data inverse-quantized and inverse-DCT processed by the inverse-quantization/inverse-DCT unit 2 and the predictive picture produced by the motion compensating prediction unit 3 and outputs a decoded picture.

As shown in Fig. 1, the prior art moving picture decoder has the three frame memories 5a to 5c to store two frames of reference picture used for prediction and one frame of B-picture. In other words, the frame memory 5a stores a reference frame used for forward prediction, the frame memory 5b stores a reference frame used for backward prediction, and the frame memory 5c stores a B-picture frame.

Every time the moving picture decoder decodes an input I-picture frame or an input P-picture frame, the frame memory 5a and the frame memory 5b store the alternately decoded I-picture frame or P-picture frame. In other words, when the decoded picture is an I-picture or a P-picture, it is stored in the frame memory 5a or the frame memory 5b and is used for reproducing another predictive-coded picture. To this end, the moving picture decoder switches the destination of the storage of the decoded picture by using the switch 6 every time an I-picture frame or a P-picture frame is input thereto.

On the other hand, though when the decoded picture is a B-picture it is not necessary to refer to the B-picture in order to reproduce a predictive-coded picture, the moving picture decoder controls the switch 6 so as to store the decoded picture, i.e., the decoded B-picture frame in the frame memory 5c in order to perform conversion of the frame-based picturey into a field-based picture, enlargement or reduction of the picture size, adjustment of the output timing, and so on.

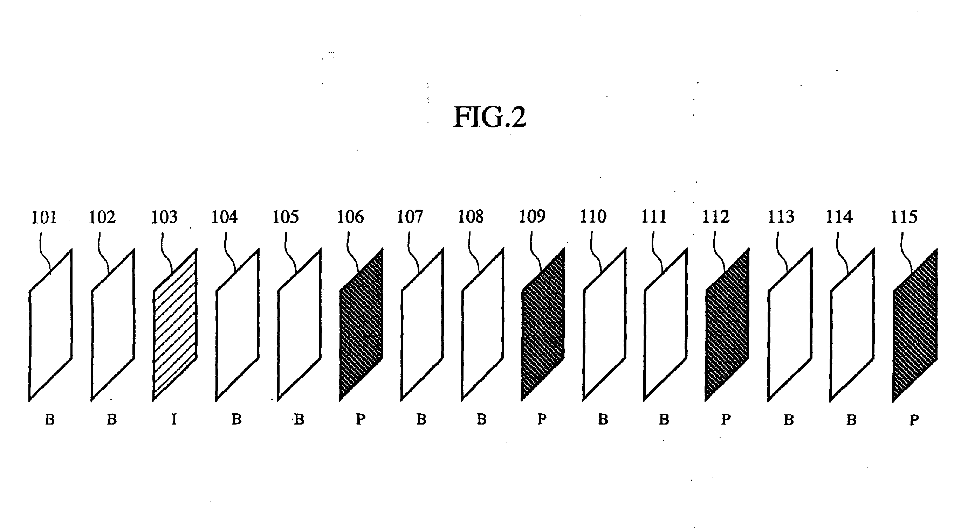

For example, when video bit stream data having an order of display shown in Fig. 2 is input, the moving picture decoder decodes a frame 103 which is the first I-picture frame and stores the decoded picture in the frame memory 5a, and then decodes the next frame 106 which is a P-picture frame and stores the decoded picture in the frame memory 5b. Then, when decoding the next two frames 104 and 105 which are B-picture frames, the moving picture decoder uses the decoded picture data stored in the frame memory 5a as a reference picture used for forward prediction and uses the decoded picture data stored in the frame memory 5b as a reference picture used for backward prediction. The moving picture decoder then stores the two decoded results in the frame memory 5c.

When the moving picture decoder decodes the next frame 109 which is a P-picture frame, it writes the decoded result in one of the two frame memories 5a and 5b (in this case, the frame memory 5a) in which older decoded picture data has already been written. Then, when decoding the next two frames 107 and 108 which are B-picture frames, the moving picture decoder uses the decoded picture data stored in the frame memory 5b as the reference picture used for forward prediction, and uses the decoded picture data stored in the frame memory 5a as the reference picture used for backward prediction. The moving picture decoder then stores the two decoded results in the frame memory 5c.

When decoding an I-picture, the motion compensating prediction unit 3 outputs 0 to the adder 4. When decoding a P-picture, the motion compensating prediction unit 3 outputs picture data acquired by moving the decoded picture data stored in the frame memory 5a or the frame memory 5b by a motion vector decoded by the variable-length decoding unit 1. When decoding a B-picture, the motion compensating prediction unit 3 outputs picture data acquired by moving the decoded picture data stored in the frame memories 5a and 5b by the motion vector decoded by the variable-length decoding unit 1.

The prior art moving picture decoder delivers the decoded picture data thus obtained and stored in the frame memories 5a to 5c to a display unit 9 in the order that they are to be displayed by switching the switch 7.

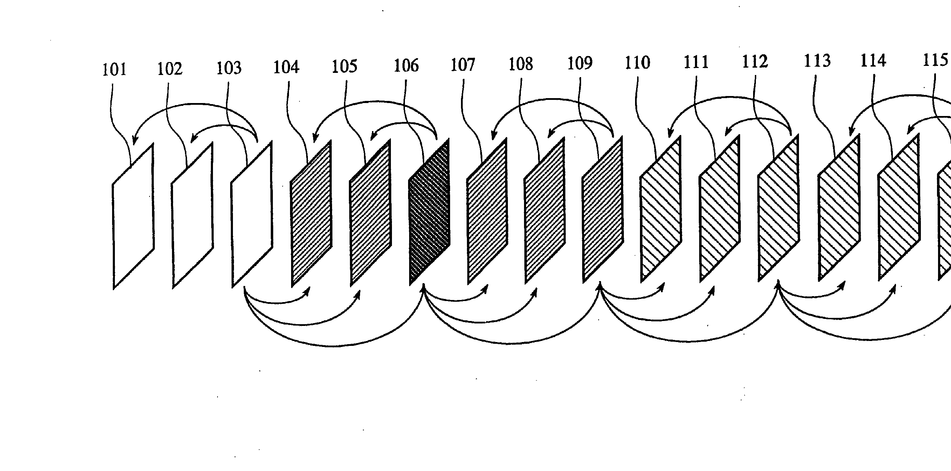

By the way, though moving pictures are coded through predictive coding in the case of a moving picture compression and decompression standard, such as MPEG2 or MPEG4, when a reference frame used for prediction has a loss of data due to transmission errors or the like, an influence of the data loss can be exerted upon other frames. For example, referring to Fig. 3 showing a GOP (Group of Pictures) structure with N=15 and M=3, frames are running in the direction from left to right in the order that they are to be displayed. When an error causes a disturbance in a frame 106 that is an P-picture, an influence of the error is exerted upon frames 104, 105, 107, 108, and 109 which use the frame 106 as the reference picture used for prediction. Similarly, an influence of the error is exerted upon frames 110, 111, and 112 which use the frame 109 as the reference picture used for prediction and an influence of the error is exerted upon frames 113, 114, and 115 which use the frame 112 as the reference picture used for prediction. In other words, an error that occurs in the frame 106 exerts an influence upon 12 frames except 3 frames 101, 102, and 103.

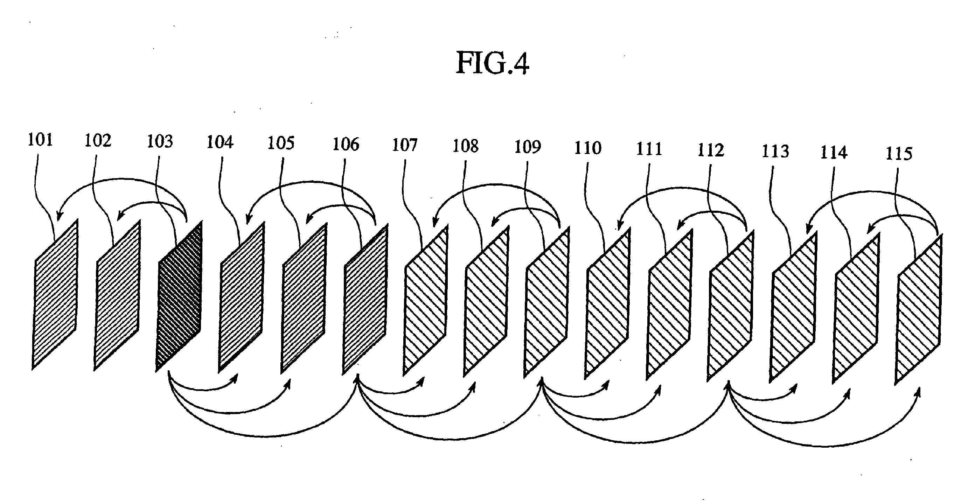

Fig. 4 is a diagram showing an example when an error occurs in an I-picture frame. When an error occurs in the frame 103 that is an I-picture, an influence of the error is exerted upon the frames 101, 102, 104, 105, and 106 which use the frame 103 as the reference picture used for prediction. In addition, the error that occurs in the frame 106 exerts an influence upon other frames starting from the one 107, as mentioned above. In this case, the influence is thus exerted upon all the frames shown in Fig. 4.

Therefore, though the prior art moving picture decoder as shown in Fig. 1 can deal with errors by performing an error concealment process, such as replacing pixels where an error occurs by pixels at the same positions of the immediately preceding frame, a problem with the prior art moving picture decoder is that while such an error concealment process is effective in dealing with easy-to-handle errors, serious errors cause a disturbance in the moving picture, resulting in a hard-to-see picture being output.

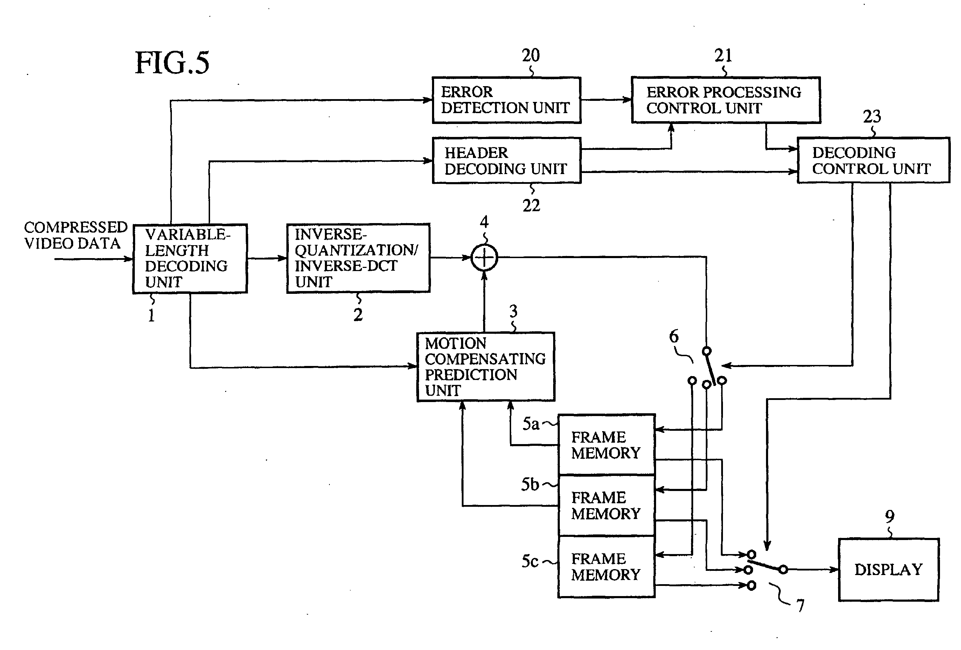

Fig. 5 is a block diagram showing the structure of a moving picture decoder that was developed to solve the problem encountered with such prior art error concealment processing, as disclosed in Japanese patent application publication (TOKKAIHEI) No. 10-23431, the moving picture decoder being able to, when it cannot normally perform decoding because of occurrence of errors, output a decoded picture which has already been decoded instead of a picture which cannot be decoded. In the figure, the same reference numerals as shown in Fig. 1 denote the same components or like components. Furthermore, in Fig. 5, reference numeral 20 denotes an error detection unit that detects an error when a coded picture which cannot be variable-length decoded because of occurrence of transmission bit errors or the like is input to a variable-length decoding unit 1, and that notifies an error processing control unit 21 of the error detection, and reference numeral 22 denotes a header decoding unit that receives header information included in the input coded picture from the variable-length decoding unit 1, decodes the header information, and outputs information indicating the picture type of the coded picture to a decoding control unit 23 and the error processing control unit 21.

Next, a description will be made as to the operation of the prior art moving picture decoder.

The decoding control unit 23 controls the variable-length decoding unit 1, a inverse-quantization/inverse-DCT unit 2, a motion compensating prediction unit 3, and a switch 6 so as to decode a series of input coded pictures one by one, store the decoded pictures in frame memories 5a to 5c, and controls and switches a switch 7 so as to output the decoded picture data stored in the frame memories 5a to 5c to a display unit 9 in the order that they are to be displayed. .

When the error detection unit 20 detects an error while the moving picture decoder decodes the series of input coded pictures, the error detection unit notifies the error processing control unit 21 of the error detection. When the error processing control unit 21 receives the notification about the error detection from the error detection unit 20, the error processing control unit 21 instructs the decoding control unit 23 to stop the decoding of a coded picture being currently decoded, and to discard data from the coded picture to the next picture including a sequence layer and so on according to circumstances under which the error occurs. As a result, the decoding control unit 23 causes the variable-length decoding unit 1 to discard codes generated by the variable-length decoding unit 1, and controls the inverse-quantization/inverse-DCT unit 2 and the motion compensating prediction unit 3 to stop the decoding. In addition, the decoding control unit 23 controls the switch 7 so as to read picture data which has already been decoded from either of the frame memories 5a to 5c instead of the picture data not decoded and output the read picture data to the display unit 9.

When the error processing control unit 21 is notified of the picture type of the picture which should be decoded next by the header decoding unit 22, the error processing control unit 21 determines whether or not the picture can be normally decoded, and instructs the decoding control unit 23 to decode the picture when the picture can be normally decoded, whereas the error processing control unit 21 instructs the decoding control unit 23 to discard codes immediately before the next picture when the picture cannot be normally decoded.

As a result, even when the series of input coded pictures includes one or more pictures which cannot be normally decoded, the moving picture decoder shown in the Fig. 5 never outputs any disturbed picture.

A problem with the prior art moving picture decoder constructed as mentioned above is that though it can prevent any disturbed picture from being output when an error such as a transmission error occurs, since it stops the decoding of coded pictures which cannot be normally decoded because of occurrence of an error regardless of the nature of the error, such as the frequency of error occurrence or the like, and replaces them with an already-decoded picture and outputs the already-decoded picture, the same picture continues to be output during the occurrence of the error, so that the observer has a sense of incompatibility.

The present invention is proposed to solve the above-mentioned problems, and it is therefore an object of the present invention to provide a moving picture decoding method and a moving picture decoder capable of not displaying any disturbed picture by decoding a coded picture regardless of whether an error occurs in the coded picture, and by controlling the display of the decoded picture according to an error that may occur in the coded picture or the nature of the error such as the frequency of error occurrence or the like.

### Disclosure of the Invention

In accordance with claim 1 of the present invention, a moving picture decoding method comprises the steps of: determining whether or not there is an error in a coded picture to be decoded which is included in input compressed video data; decoding the coded picture regardless of whether or not there is an error in the coded picture and storing decoded picture data in a memory means; and controlling a transfer of decoded picture data from the memory means based on error information on detected errors.

Consequently, the present invention provides an advantage of being able to prevent the display of any hard-to-see picture disturbed due to the occurrence of errors.

In accordance with claim 2 of the present invention, the moving picture decoding method has the step of stopping the transfer of decoded picture data from the memory means based on the error information.

Consequently, the present invention provides an advantage of being able to prevent the display of any hard-to-see picture disturbed due to the occurrence of errors based on the error information.

In the moving picture decoding method in accordance with claim 3 of the present invention, the error information is a frequency of occurrence of errors.

Consequently, the present invention provides an advantage of being able to enable the display of decoded pictures including an error unremarkable from the viewpoint of visibility, and to shorten the length of time that the same picture continues to be displayed during the detection of errors, so that a more natural image can be displayed.

In accordance with claim 4 of the present invention, the moving picture decoding method comprises the step of, after stopping the transfer of decoded picture data from the memory means, restarting the transfer of decoded picture data, starting from the one concerning a coded picture to be decoded, from the memory means when the coded picture has no error and is an I-picture that is to be decoded without the use of a reference picture used for prediction.

Consequently, the present invention provides an advantage of being able to cut off the propagation of errors by preventing any reference picture used for prediction including an error from being used for decoding other frames, thereby preventing the display of any hard-to-see picture disturbed due to the occurrence of errors.

In accordance with claim 5 of the present invention, the moving picture decoding method has the step of, after stopping the transfer of decoded picture data from the memory means, restarting the transfer of decoded picture data from the memory means after the expiration of a predetermined time interval.

Consequently, the present invention provides an advantage of being able to prevent the same picture from being output for a long time even when the compressed video data includes no I-picture that is to be decoded without the use of a reference frame used for prediction.

In accordance with claim 6 of the present invention, the moving picture decoding method has the step of, after stopping the transfer of decoded picture data from the memory means, restarting the transfer of decoded picture data, starting from the one concerning a coded picture to be decoded, from the memory means when all macroblock data included in the coded picture become intracoded data that need no prediction.

Consequently, the present invention provides an advantage of being able to cut off the propagation of errors because the method has the step of restarting the transfer of decoded picture data starting from the one concerning a frame in which all macroblocks are intracoded macroblocks, thereby preventing the display of any hard-to-see picture disturbed due to the occurrence of errors, as well as being able to prevent the same picture from being output for a long time even when the compressed video data includes no I-picture that is to be decoded without the use of a reference frame used for prediction.

In accordance with claim 7 of the present invention, the moving picture decoding method has the controlling step of transferring picture data that is prepared in advance, instead of the decoded picture data on the coded picture having an error, based on the error information.

Consequently, the present invention provides an advantage of being able to prevent the display of any disturbed picture while preventing causing of user discomfort by displaying a picture specified by the user when an error occurs. In the moving picture decoding method in accordance with claim 8 of the present invention, the error information is a frequency of occurrence of errors.

Consequently, the present invention provides an advantage of being able to enable the display of decoded pictures including an error unremarkable from the viewpoint of visibility, and to shorten the length of time that the same picture continues to be displayed during the detection of errors, so that a more natural image can be displayed.

In accordance with claim 9 of the present invention, a moving picture decoder includes a decoding means for decoding a coded picture included in an input compressed video data and for outputting decoded picture data; an error detection means for determining whether or not there is an error in the coded picture to be decoded and for, when detecting an error, furnishing error information on the error; a memory means for storing the decoded picture data from the decoding means; and a control means for storing the decoded picture data obtained by the decoding means in the memory means regardless of whether the error detection means has detected an error in the coded picture, and for controlling transfer of decoded picture data from the memory means based on the error information from the error detection means.

Consequently, the present invention provides an advantage of being able to prevent the display of any hard-to-see picture'disturbed due to the occurrence of errors. In the moving picture decoder in accordance with claim 10 of the present invention, the control means stops the transfer of decoded picture data from the memory means based on the error information from the error detection means.

Consequently, the present invention provides an advantage of being able to prevent the display of any hard-to-see picture disturbed due to the occurrence of errors based on the error information.

In the moving picture decoder in accordance with claim 11 of the present invention, the error information is a frequency of occurrence of errors.

Consequently, the present invention provides an advantage of being able to enable the display of decoded pictures including an error unremarkable from the viewpoint of visibility, and to shorten the length of time that the same picture continues to be displayed during the detection of errors, so that a more natural image can be displayed.

In the moving picture decoder in accordance with claims 12 and 13 of the present invention, after stopping the transfer of decoded picture data from the memory means, the control means restarts the transfer of decoded picture data, starting from the one concerning a coded picture to be decoded, from the memory means when the coded picture has no error and is an I-picture that is to be decoded without the use of a reference picture used for prediction.

Consequently, the present invention provides an advantage of being able to cut off the propagation of errors by preventing any reference picture used for prediction including an error from being used for decoding other frames, thereby preventing the display of any hard-to-see picture disturbed due to the occurrence of errors.

In the moving picture decoder in accordance with claims 14 and 15 of the present invention, after stopping the transfer of decoded picture data from the memory means, the control means restarts the transfer of decoded picture data from the memory means after the expiration of a predetermined time interval.

Consequently, the present invention provides an advantage of being able to prevent the same picture from being output for a long time even when the compressed video data includes no I-picture that is to be decoded without the use of a reference frame used for prediction.

In the moving picture decoder in accordance with claims 16 and 17 of the present invention, after stopping the transfer of decoded picture data from the memory means, the control means restarts the transfer of decoded picture data, starting from the one concerning a coded picture to be decoded, from the memory means when all macroblock data included in the coded picture become intracoded data that need no prediction.

Consequently, the present invention provides an advantage of being able to cut off the propagation of errors because the method has the step of restarting the transfer of decoded picture data starting from the one concerning a frame in which all macroblocks are intracoded macroblocks, thereby preventing the display of any hard-to-see picture disturbed due to the occurrence of errors, as well as being able to prevent the same picture from being output for a long time even when the compressed video data includes no I-picture that is to be decoded without the use of a reference frame used for prediction.

In the moving picture decoder in accordance with claim 18 of the present invention, the control means transfers picture data that is prepared in advance, instead of the decoded picture data of the coded picture having an error, based on the error information from the error detection means.

Consequently, the present invention provides an advantage of being able to prevent the display of any disturbed picture while preventing causing of user discomfort by. displaying a picture specified by the user when an error occurs.

In the moving picture decoding method in accordance with claim 19 of the present invention, the error information is a frequency of occurrence of errors.

Consequently, the present invention provides an advantage of being able to enable the display of decoded pictures including an error unremarkable from the viewpoint of visibility, and to shorten the length of time that the same picture continues to be displayed during the detection of errors, so that a more natural image can be displayed.

### Brief Description of the Figures

Fig. 1 is a block diagram showing the structure of a prior art moving picture decoder;
Fig. 2 is a diagram showing an example of a GOP structure;
Fig. 3 is a diagram showing propagation of an error that occurs in a P-picture;
Fig. 4 is a diagram showing propagation of an error that occurs in an I-picture;
Fig. 5 is a block diagram showing the structure of another prior art moving picture decoder;
Fig. 6 is a block diagram showing the structure of a moving picture decoder according to embodiment 1 of the present invention;
Fig. 7 is a diagram showing a process of starting the display of an I-picture and later pictures after error detection, in accordance with embodiment 3 of the present invention;
Fig. 8 is a diagram showing a process of starting the display of pictures after the expiration of an predetermined time interval after error detection, in accordance with embodiment 4 of the present invention;
Fig. 9 is a diagram showing a case where some macroblocks are not intracoded macroblocks after error detection; and
Fig. 10 is a block diagram showing the structure of a moving picture decoder according to embodiment 6 of the present invention.

### Preferred Embodiments of the Invention

Hereafter, to explain the present invention more in detail, the preferred embodiments of the present invention will be described with reference to the accompanied drawings.

### Embodiment 1.

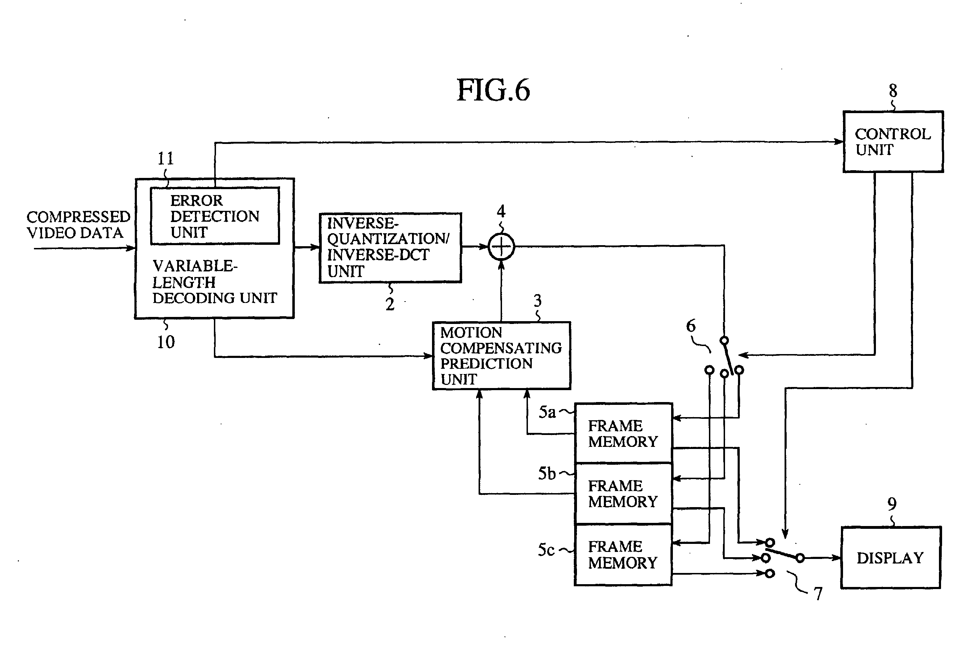

Fig. 6 is a block diagram showing the structure of a moving picture decoder according to embodiment 1 of the present invention. In the figure, reference numeral 10 denotes a variable-length decoding unit that variable-length decodes compressed coded video data received thereby, reference numeral 11 denotes an error detection unit (error detection means) that detects an error, such as a transmission bit error, which can occur in the received, compressed coded video data, reference numeral 2 denotes a inverse-quantization/inverse-DCT unit that performs inverse-quantization and inverse-DCT on the variable-length decoded data, reference numeral 3 denotes a motion compensating prediction unit that produces a predictive picture according to motion vector information decoded by the variable-length decoding unit 10, reference numeral 4 denotes an adder that adds inverse-quantized and inverse-DCT processed data and the predictive picture, reference numerals 5a, 5b, and 5c denote frame memories (memory means), respectively, reference numeral 6 denotes a switch that switches the destination of the output of the adder 4 to either of the frame memories 5a to 5c so as to send the output of the adder 4 to either of the frame memories 5a to 5c, reference numeral 7 denotes a switch that selects one of the outputs of the frame memories 5a to 5c so as to send out the selected output, and reference numeral 8 denotes a control unit (control means) that controls the switches 6 and 7 according to an error detected by the error detection unit 11. A decoding means includes the variable-length decoding unit 10, the inverse-quantization/inverse-DCT unit 2, the motion compensating prediction unit 3, and the adder 4.

Next, a description will be made as to the operation of the moving picture decoder according to embodiment 1.

The variable-length decoding unit 10 variable-length decodes compressed video data received thereby. In this case, the error detection unit 11 determines whether or not there is an error in each coded picture or frame to be decoded, which is included in the received compressed video data. When detecting an error, the error detection unit 11 transmits error information on the error to the control unit 8. In the following, the case where the error detection unit 11 does not detect any error will be explained.

The inverse-quantization/inverse-DCT unit 2 performs inverse-quantization and inverse-DCT on the data variable-length decoded by the variable-length decoding unit 10 and outputs the inverse-quantized and inverse-DCT processed data to the adder 4. On the other hand, the motion compensating prediction unit 3 produces a predictive picture according to motion vector information decoded by the variable-length decoding unit 10 and outputs the prediction picture to the adder 4. The adder 4 then adds the data inverse-quantized and inverse-DCT processed by the inverse-quantization/inverse-DCT unit 2 and the predictive picture produced by the motion compensating prediction unit 3 and outputs a decoded picture.

When the decoded picture, which is the addition result from the adder, is an I-picture or a P-picture, the control unit 8 controls the switch 6 so as to alternately store the decoded picture in the frame memory 5a or the frame memory 5b. When the decoded picture is a B-picture, the control unit 8 controls the switch 6 so as to store the decoded picture in the frame memory 5c.

For example, when video bit stream data having an order of display as shown in Fig. 2 is input, the control unit 8 stores a frame 103 which is the first I-picture frame in the frame memory 5a. The decoded picture data stored in the frame memory 5a is referred to as a reference frame used for backward prediction for frames 101 and 102 which are to be decoded next and are B-pictures and is also referred to as a reference frame used for forward prediction for a frame 106 which is to be decoded after next and is a P-picture. The motion compensating prediction unit 3 then refers to the decoded picture data stored in the frame memory 5a as the reference frame used for forward prediction, and decodes the frame 106 which is a P-picture. The control unit 8 stores the decoded result in the frame memory 5b in which the previous I-picture or P-picture has not been stored. The decoded picture data stored in the frame memory 5b is referred to as the reference frame used for forward prediction for a frame 109 which is to be decoded next and is a P-picture frame.

The motion compensating prediction unit 3 then refers to the decoded picture data stored in the frame memory 5a as a reference frame used for forward prediction, further refers to the decoded picture data stored in the frame memory 5b as a reference frame used for backward prediction, and sequentially decodes frames 104 and 105 which are B-picture frames, and the control unit 8 stores these decoded results in the frame memory 5c.

The control unit 8 similarly stores the decoded result obtained by decoding the frame 109 in the frame memory 5a in which the previous I-picture or P-picture has not been stored. The motion compensating prediction unit 3 then refers to the decoded picture data stored in the frame memory 5a as the reference frame used for backward prediction, further refers to the decoded picture data stored in the frame memory 5b as the reference frame used for forward prediction, and sequentially decodes frames 107 and 108 which are B-picture frames, and the control unit 8 stores these decoded results in the frame memory 5c. The decoding result of the frame 109 is referred to as the reference frame used for forward prediction for a frame 112 which is to be decoded next and is a P-picture frame.

After that, when decoding an I-picture or a P-picture, the control unit 8 writes the decoded result in one of the frame memories 5a and 5b, in which the decoded picture data of the immediately preceding I-picture or P-picture has not been stored, and the motion compensating prediction unit 3 uses the decoded picture data written into the frame memory as the reference frame used for backward prediction for a B-picture which is to be then decoded. The motion compensating prediction unit 3 also uses the decoded picture data stored in the other one of the frame memories 5a and 5b, in which the decoded result has not been written by the control unit, as the reference frame used for forward prediction.

The control unit 8 transfers the decoded picture data stored in the frame memories 5a to 5c to the display unit 9 in the order that they are to be displayed by controlling the switch 7 so as to selectively connect one of the outputs of the frame memories 5a to 5c to the display unit 9. The display unit 9 has at least one frame memory and sequentially displays pictures which have been transferred from the frame memories 5a to 5c by way of the switch 7.

In contrast, when the error detection unit 11 of the variable-length decoding unit 10 detects an error, the error detection unit 11 transmits error information on the detected error to the control unit 8. The control unit 8 controls the switch 6, as in the case where no error is detected, so as to update the decoded picture data stored in the frame memories 5a to 5c. The control unit 8 also controls the switching done by the switch 7 so as to prevent any decoded picture data containing an error from being output from either of the frame memories 5a to 5c to the display unit 9. As a result, the display unit 9 keeps displaying the picture last transferred thereto until the next data output is started because either of the frame memories 5a to 5c outputs no decoded picture data.

After that, when the error detection unit 11 does not detect any error, the control unit 8 controls the switching done by the switch 7 so as to restart the transfer of decoded picture data to the display unit 9. When the error detection unit 11 does not detect any error, it notifies the control unit 8 of no detection of errors in such a way that the error detection unit 11 notifies the control unit 8 of error information when the error detection unit 11 detects an error. Therefore, the control unit 8 controls the switching done by the switch 7 so as to release the switch from the state in which neither of the decoded picture data stored in the frame memories 5a to 5c has been output and to sequentially restart the transfer of decoded picture data stored in either of the frame memories 5a to 5c, as in the case where no error is detected. From which one of the frame memories decoded picture data is output is uniquely determined according to whether the decoded frame is an I-picture frame, a P-picture frame, or a B-picture frame, as previously mentioned.

As mentioned above, in accordance with embodiment 1 of the present invention, since the control unit 8 controls the switch 7 so as to store decoded picture data in either of the frame memories 5a to 5c regardless of whether the error detection unit 11 detects an error, and so as not to transfer any decoded picture data having an error to the display unit 9, the present embodiment provides an advantage of being able to prevent the display of any hard-to-see picture disturbed due to the occurrence of errors.

Furthermore, since the control unit 8 stores the decoded picture data in either of the frame memories 5a to 5c regardless of whether the error detection unit 11 detects an error, the present embodiment provides the flexibility of being able to control the display of pictures according to the nature of an error that occurs in the input bit stream, which will be described in detail in the following embodiment.

### Embodiment 2.

A moving picture decoder according to embodiment 2 of the present invention is provided with an error detection unit 11 disposed in a variable-length decoding unit 10, which detects an error such as a transmission error and. which determines the frequency of occurrence of errors, and a control unit 8 that outputs decoded picture data having an error to a display unit 9 when the frequency of occurrence of errors determined by the error detection unit 11 is small with a small influence on pictures. Since the other components of the moving picture decoder according to this embodiment 2 are the same as those of the moving picture decoder according to above-mentioned embodiment 1 shown in Fig. 6, the explanation of the other components will be omitted hereafter.

Next, a description will be made as to the operation of the moving picture decoder according to embodiment 2.

Since when the error detection unit does not detect any error the moving picture decoder according to embodiment 2 operates in the same manner that that according to above-mentioned embodiment 1 does, only the display control according to the frequency of occurrence of errors will be explained below.

When the error detection unit 11 of the variable-length decoding unit 10 detects an error in a coded picture or frame to be decoded, which is included in input compressed video data, the error detection unit 11 transmits error information on the error, such as the data length of one frame, the length of a decoded word which is determined that the error occurs in the word, the number of macroblocks including the error, the number of blocks including the error, to the control unit 8. The control unit 8 determines if one or more of the following conditions: the length of the decoded word which is determined that the error occurs in the word is equal to or greater than a predetermined value, the number of macroblocks including the error is equal to or greater than a predetermined value, and the number of blocks including the error is equal to or greater than a predetermined value are satisfied based on the error information from the error detection unit 11. When determining that one or more of the above conditions are satisfied, the control unit 8 determines that the frequency of occurrence of errors is large with a large influence on pictures, and controls the switching done by a switch 7 so that no decoded picture data stored in either of the frame memories 5a to 5c is transferred to the display unit 9.

On the other hand, when neither of the above-mentioned conditions is satisfied, the control unit 8 determines that the frequency of occurrence of errors is small with a small influence on pictures, and controls the switching done by the switch 7 so that the decoded picture data stored in either of the frame memories 5a to 5c is transferred to the display unit 9. As previously mentioned, from which one of the frame memories decoded picture data is output is uniquely determined according to whether the decoded frame is an I-picture frame, a P-picture frame, or a B-picture frame

Although a motion compensating prediction unit 3 performs error concealment processing according to a well-known method when an error occurs, when the frequency of occurrence of errors is small the error concealment processing provide pictures which are not very hard to be visible.

As mentioned above, in accordance with embodiment 2 of the present invention, since the moving picture decoder controls the display of decoded pictures according to the frequency of occurrence of errors instead of controlling the display of decoded pictures according to whether or not an error is detected, the present embodiment provides an advantage of being able to enable the display of decoded pictures including an error unremarkable from the viewpoint of visibility, and to shorten the length of time that the same picture continues to be displayed during the detection of errors, so that a more natural image can be displayed.

### Embodiment 3.

A moving picture decoder according to embodiment 3 of the present invention is provided with a control unit 8 for restarting the transfer of decoded picture data, starting from the one concerning an error-free I-picture which is to be decoded without using a reference frame used for prediction, to a display unit 9 when an error detection unit 11 determines that no error has been detected or the frequency of occurrence of errors has become small based on error information, such as the frequency of occurrence of errors after stopping the transfer of decoded picture data from frame memories 5a to 5c to the display unit 9. Since the other components of the moving picture decoder according to this embodiment 3 are the same as those of the moving picture decoder according to above-mentioned embodiment 1 shown in Fig. 6, the explanation of the other components will be omitted hereafter.

Next, a description will be made as to the operation of the moving picture decoder according to embodiment 3.

Since when an error is detected the moving picture decoder according to embodiment 3 operates in the same manner that that according to above-mentioned embodiment 1 or 2 does, only restarting of the transfer of decoded picture data to the display unit 9 will be explained below.

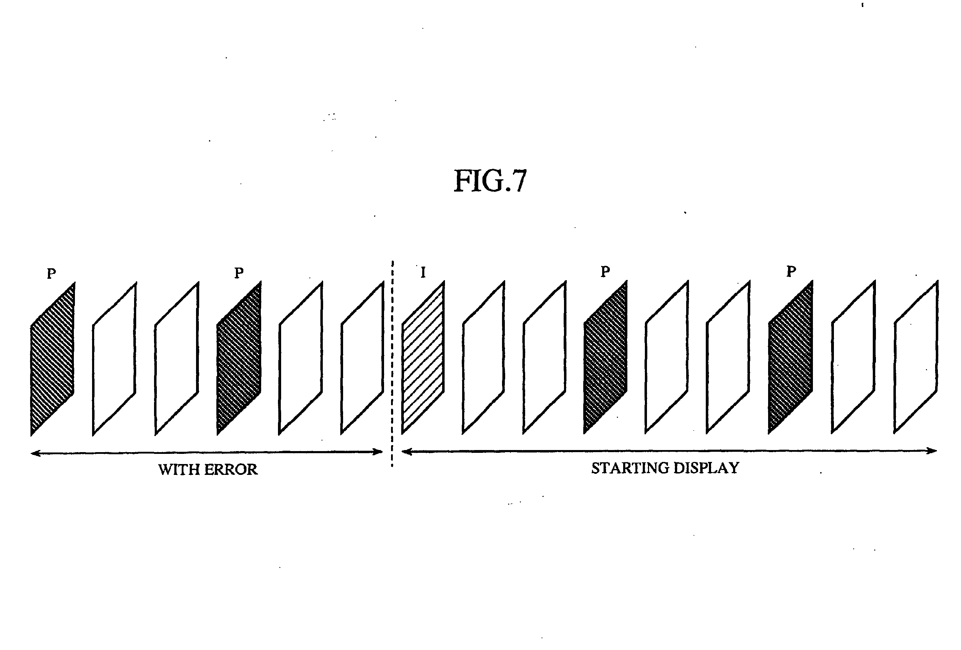

Fig. 7 is a diagram showing a series of frames running before and behind an I-picture. Assuming that an error has occurred in another I-picture preceding the I-picture shown in the figure, since each frame preceding the I-picture shown in the figure is decoded using the decoded picture data of the other I-picture having an error as the reference picture used for prediction, each frame is a decoded picture affected by the error. On the other hand, if no error occurs in each frame following the I-picture shown in the figure, each frame following the I-picture can be assumed to be an error-free decoded picture.

The control unit 8 has information indicating whether or not each I-picture has been decoded and information indicating whether each of frames running in the order that they are to be displayed has an error associated with each I-picture. When an I-picture is decoded and at least the I-picture has no error, the control unit 8 controls the switching done by a switch 7 and restarts the transfer of decoded picture data stored in the frame memories 5a to 5c to the display unit 9. As previously mentioned, from which one of the frame memories decoded picture data is output is uniquely determined according to whether the decoded frame is an I-picture frame, a P-picture frame, or a B-picture frame.

As mentioned above, in accordance with embodiment 3 of the present invention, since the moving picture decoder restarts the transfer of decoded picture data, starting from the one concerning an I-picture, to the display unit 9 based on error information such as the frequency of occurrence of errors, when the I-picture used as the reference picture used for prediction does not have any error after stopping the transfer of decoded picture data from the frame memories 5a to 5c to the display unit 9, the present embodiment provides an advantage of being able to cut off the propagation of errors by preventing any reference picture used for prediction including an error from being used for decoding other frames, thereby preventing the display of any hard-to-see picture disturbed due to the occurrence of errors.

### Embodiment 4.

A moving picture decoder according to embodiment 4 of the present invention is provided with a control unit 8 for restarting the transfer of decoded picture data to a display unit 9 based on error information, such as the frequency of occurrence of errors, after the expiration of a predetermined time interval after stopping the transfer of decoded picture data from frame memories 5a to 5c to the display unit 9. Since the other components of the moving picture decoder according to this embodiment 4 are the same as those of the moving picture decoder according to above-mentioned embodiment 1 shown in Fig. 6, the explanation of the other components will be omitted hereafter.

Next, a description will be made as to the operation of the moving picture decoder according to embodiment 4.

Since when an error is detected the moving picture decoder according to embodiment 4 operates in the same manner that that according to above-mentioned embodiment 1 or 2 does, only restarting of the transfer of decoded picture data to the display unit 9 will be explained below.

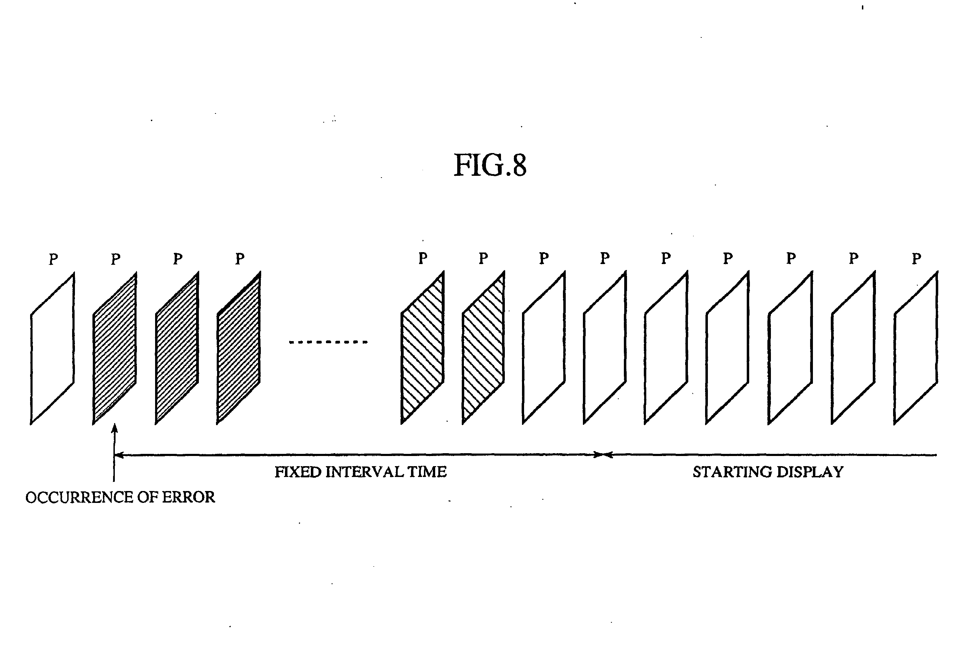

Fig. 8 is a diagram showing a series of frames including only P-pictures, which follows an I-picture. When such a series of frames is input, the control unit 8 of the moving picture decoder according to above-mentioned embodiment 3 cannot transfer decoded picture data from the frame memories 5a to 5c to the display unit 9 by switching and controlling a switch 7 because no I-picture is input and therefore the condition for restarting the transfer of decoded picture data to the display unit 9 is never satisfied. In other words, the moving picture decoder according to above-mentioned embodiment 3 keeps displaying a static picture as long as it does not receive an error-free I picture.

In such a case, the control unit 8 of the moving picture decoder according to this embodiment 4 can determine that the influence of an error has become small after the expiration of a predetermined time interval after the error occurred, and can restart the transfer of decoded picture data to the display unit 9. In other words, when the predetermined time has elapsed since the error occurred, the control unit 8 controls the switching done by the switch 7 so as to restart the transfer of decoded picture data to the display unit 9, and transfers decoded picture data stored in either of the frame memories 5a to 5c to the display unit. As previously mentioned, from which one of the frame memories decoded picture data is output is uniquely determined according to whether the decoded frame is an I-picture frame, a P-picture frame, or a B-picture frame.

As mentioned above, in accordance with embodiment 4 of the present invention, since the moving picture decoder restarts the transfer of decoded picture data to the display unit 9 based on error information, such as the frequency of occurrence of errors, after the expiration of a predetermined time interval after stopping the transfer of decoded picture data from the frame memories 5a to 5c to the display unit 9, the present embodiment provides an advantage of being able to prevent the same picture from being output for a long time even when the compressed video data includes no I-picture that is to be decoded without the use of a reference frame used for prediction.

### Embodiment 5.

A moving picture decoder according to embodiment 5 of the present invention is provided with a control unit 8 for restarting the transfer of decoded picture data to a display unit 9 based on error information, such as the frequency of occurrence of errors, when all macroblock data included in a frame to be decoded next become intracoded data that can be decoded without the use of any reference frame used for prediction, i.e., intra macroblock data after stopping the transfer of decoded picture data from frame memories 5a to 5c to the display unit 9. Since the other components of the moving picture decoder according to this embodiment 5 are the same as those of the moving picture decoder according to above-mentioned embodiment 1 shown in Fig. 6, the explanation of the other components will be omitted hereafter.

Next, a description will be made as to the operation of the moving picture decoder according to embodiment 5.

Since when an error is detected the moving picture decoder according to embodiment 5 operates in the same manner that that according to above-mentioned embodiment 1 or 2 does, only restarting of the transfer of decoded picture data to the display unit 9 will be explained below.

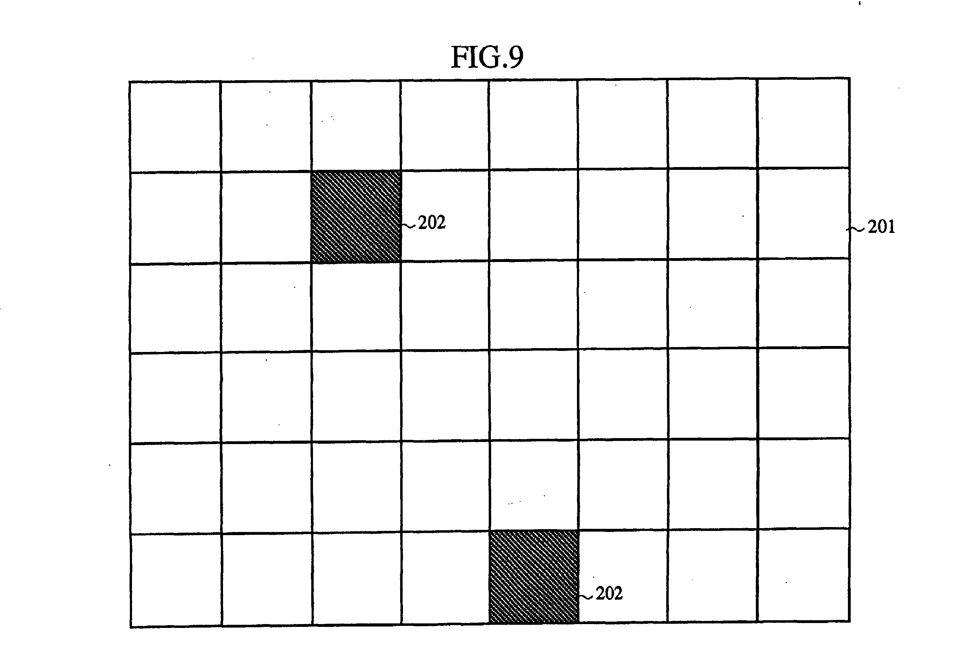

Fig. 9 is a diagram showing an example of a frame which consists of 8 x 6 macroblocks running in horizontal and vertical directions, respectively. Each square corresponds to one macroblock in the figure. Each hollow macroblock 201 is/ an intra macroblockwhich is intra-decoded after it has become free of errors, whereas each shaded macroblock 202 is a non-intra macroblock which is not intra-decoded yet after it has become free of errors.

After stopping the transfer of decoded picture data from the frame memories 5a to 5c to the display unit 9, the control unit 8 determines whether all macroblock data included in a frame to be decoded have become intracoded data to be decoded without the use of any reference frame used for prediction, i.e., intra macroblock data based on error information such as the frequency of occurrence of errors. For example, in the case as shown in Fig. 9, when the two macroblocks 202 are decoded with intra macroblocks and the control unit 8 determines that all the macroblock data are intra-decoded data, the control unit 8 controls the switching done by a switch 7 so as to restart the transfer of decoded picture data to the display unit 9 and transfers the decoded picture data stored in either of the frame memories 5a to 5c. As previously mentioned, from which one of the frame memories decoded picture data is output is uniquely determined according to whether the decoded frame is an I-picture frame, a P-picture frame, or a B-picture frame.

As mentioned above, in accordance with embodiment 5 of the present invention, since the moving picture decoder restarts the transfer of decoded picture data to the display unit 9 based on error information, such as the frequency of occurrence of errors, when all macroblock data included in a frame to be decoded next become intracoded data that can be decoded without the use of any reference frame used for prediction, i.e., intra macroblock data after stopping the transfer of decoded picture data from the frame memories 5a to 5c to the display unit 9, the present embodiment provides an advantage of being able to cut off the propagation of errors because the decoder restarts the transfer of decoded picture data, starting from the one concerning a frame in which all macroblocks are intracoded macroblocks, to the display unit 9, thereby preventing the display of any hard-to-see picture disturbed due to the occurrence of errors, as well as being able to prevent the same picture from being output for a long time even when the compressed video data includes no I-picture that is to be decoded without the use of a reference frame used for prediction.

### Embodiment 6.

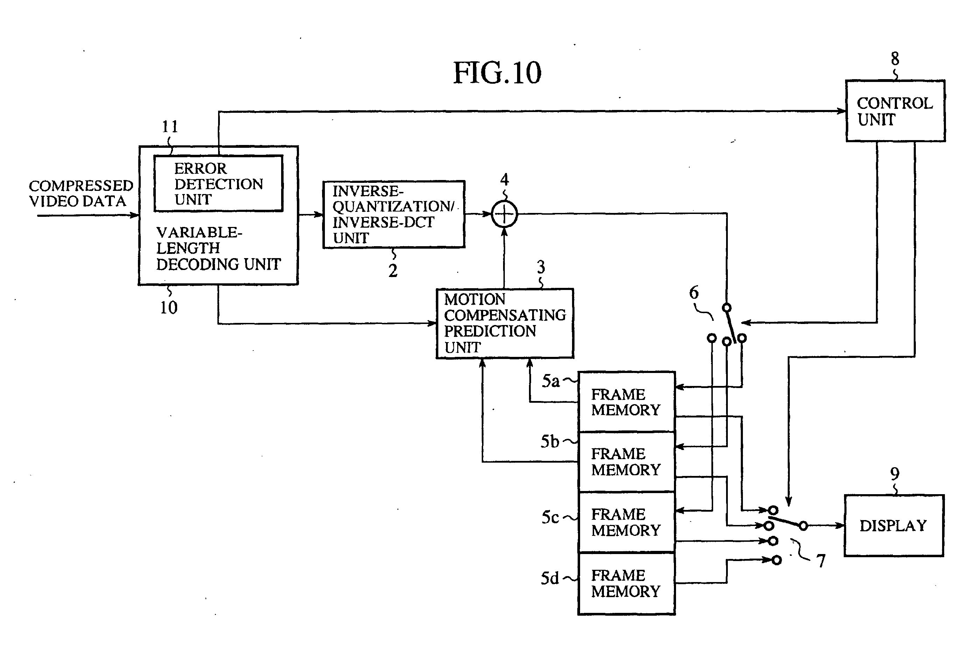

Fig. 10 is a block diagram showing the structure of a moving picture decoder according to embodiment 6 of the present invention. In the figure, the same reference numerals as shown in Fig. 6 denote the same components as those of the moving picture decoder according to above-mentioned embodiment 1 or like components. Furthermore, in Fig. 10, reference character 5d denotes a frame memory for storing desired picture data. The moving picture decoder according to this embodiment 6 differs from that according to above-mentioned embodiment 1 in that it is further provided with the frame memory 5d. A user who uses the moving picture decoder can store desired picture data in the frame memory 5d in advance. A control unit 8 is so constructed as to output the desired picture data stored in the frame memory 5d instead of decoded picture data having an error to a display unit 9 based on error information, such as the frequency of occurrence of errors, from an error detection unit 11.

Next, a description will be made as to the operation of the moving picture decoder according to embodiment 6.

Since the error detection unit 11 operates in the same way that that of the moving picture decoder according to above-mentioned embodiment 1 or 2 does, the explanation of the operation of the error detection unit 11 will be omitted hereafter.

When the error detection unit 11 does not detect any error, the control unit 8 controls the switching done by a switch 7 so as to transfer decoded picture data stored in frame memories 5a to 5c to the display unit 9 in the order that they are to be displayed.

On the other hand, when the error detection unit 11 detects an error, the control unit 8 controls the switching done by the switch 7 based on error information, such as the frequency of occurrence of errors, from the error detection unit 11 so as to output the desired picture data stored in the frame memory 5d to the display unit 9.

Since then, when the error detection unit 11 has not detected any error, the control unit 8 controls the switching done by the switch 7, as in the case where not error is detected, so as to transfer decoded picture data stored in the frame memories 5a to 5c to the display unit 9 in the order that they are to be displayed

Two or more frame memories 5d for storing a plurality of frames can be provided. In this case, when the error detection unit 11 detects an error, the control unit 8 outputs the plurality of picture data stored in the plurality of frame memories 5d to the display unit 9 one by one by sequentially selecting one of the plurality of frame memories 5d. Thus, when an error occurs, the control unit can selectively output a plurality of static pictures according to the situation, or can continuously display a series of pictures as a pseudo moving picture on the display unit 9.

As mentioned above, in accordance with embodiment 6 of the present invention, since the moving picture decoder displays a picture specified by the user when an error occurs, the present embodiment provides an advantage of being able to prevent the display of any disturbed picture while preventing causing of user discomfort.

### Industrial Applicability

As mentioned above, the moving picture decoding method and moving picture decoder according to the present invention are suitable for providing a video for users while preventing the display of any picture disturbed due to occurrence of errors such as transmission errors in video receiving terminal equipment that receives and decodes compressed coded video data according to a moving picture compression and decompression standard, such as MPEG2 or MPEG4, and that displays decoded pictures.

## Claims

1. A moving picture decoding method **characterized in that** said method comprising the steps of:
determining whether or not there is an error in a coded picture to be decoded which is included in input compressed video data; decoding said coded picture regardless of whether or not there is an error in said coded picture and storing decoded picture data in a memory means; and
controlling a transfer of decoded picture data from said memory means based on error information on detected errors.

2. The moving picture decoding method according to Claim 1, **characterized in that** said controlling step is the step of stopping the transfer of decoded picture data from said memory means based on the error information.

3. The moving picture decoding method according to Claim 2, **characterized in that** the error information is a frequency of occurrence of errors.

4. The moving picture decoding method according to Claim 2, **characterized in that** said method comprising the step of, after stopping the transfer of decoded picture data from said memory means, restarting the transfer of decoded picture data, starting from the one concerning a coded picture to be decoded, from said memory means when the coded picture has no error and is an I-picture that is to be decoded without use of a reference picture used for prediction.

5. The moving picture decoding method according to Claim 2, **characterized in that** said method comprising the step of, after stopping the transfer of decoded picture data from said memory means, restarting the transfer of decoded picture data from said memory means after the expiration of a predetermined time interval.

6. The moving picture decoding method according to Claim 2, **characterized in that** said method comprising the step of, after stopping the transfer of decoded picture data from said memory means, restarting the transfer of decoded picture data, starting from the one concerning a coded picture to be decoded, from said memory means when all macroblock data included in the coded picture become intracoded data that need no prediction.

7. The moving picture decoding method according to Claim 1, **characterized in that** said controlling step is the step of transferring picture data that is prepared in advance, instead of the decoded picture data on the coded picture having an error, based on the error information.

8. The moving picture decoding method according to Claim 7, **characterized in that** the error information is a frequency of occurrence of errors.

9. A moving picture decoder **characterized in that** said decoder comprises:
a decoding means for decoding a coded picture included in input compressed video data and for outputting decoded picture data;
an error detection means for determining whether or not there is an error in the coded picture to be decoded and for, when detecting an error, furnishing error information on the error; a memory means for storing the decoded picture data from said decoding means; and
a control means for storing the decoded picture data obtained by said decoding means in said memory means regardless of whether said error detection means has detected an error in the coded picture, and for controlling transfer of decoded picture data from said memory means based- on the- error information from said error detection means.

10. The moving picture decoder according to Claim 9, **characterized in that** said control means stops the transfer of decoded picture data from said memory means based on the error information from said error detection means.

11. The moving picture decoder according to Claim 10, **characterized in that** the error information is a frequency of occurrence of errors.

12. The moving picture decoder according to Claim 10, **characterized in that** after stopping the transfer of decoded picture data from said memory means, said control means restarts the transfer of decoded picture data, starting from the one concerning a coded picture to be decoded, from said memory means when the coded picture has no error and is an I-picture that is to be decoded without use of a reference picture used for prediction.

13. The moving picture decoder according to Claim 11, **characterized in that** after stopping the transfer of decoded picture data from said memory means, said control means restarts the transfer of decoded picture data, starting from the one concerning a coded picture to be decoded, from said memory means when the coded picture has no error and is an I-picture that is to be decoded without use of a reference picture used for prediction.

14. The moving picture decoder according to Claim 10, **characterized in that** after stopping the transfer of decoded picture data from said memory means, said control means restarts the transfer of decoded picture data from said memory means after the expiration of a predetermined time interval.

15. The moving picture decoder according to Claim 11, **characterized in that** after stopping the transfer of decoded picture data from said memory means, said control means restarts the transfer of decoded picture data from said memory means after the expiration of a predetermined time interval.

16. The moving picture decoder according to Claim 10, **characterized in that** after stopping the transfer of decoded picture data from said memory means, said control means restarts the transfer of decoded picture data, starting from the one concerning a coded picture to be decoded, from said memory means when all macroblock data included in the coded picture become intracoded data that need no prediction.

17. The moving picture decoder according to Claim 11, **characterized in that** after stopping the transfer of decoded picture data from said memory means, said control means restarts the transfer of decoded picture data, starting from the one concerning a coded picture to be decoded, from said memory means when all macroblock data included in the coded picture become intracoded data that need no prediction.

18. The moving picture decoder according to Claim 9, **characterized in that** said control means transfers picture data that is prepared in advance, instead of the decoded picture data on the coded picture having an error, based on the error information from said error detection means.

19. The moving picture decoder according to Claim 18, **characterized in that** the error information is a frequency of occurrence of errors.
